# EUROPÄISCHE PATENTSCHRIFT

(11) **EP 2 780 186 B1**
(45) Veröffentlichungstag und Bekanntmachung des Hinweises auf die Patenterteilung: **08.07.2015**
(21) Anmeldenummer: 12784208.6
(22) Anmeldetag: 19.10.2012
(51) Int. Cl.: H01H 21/22, B60K 37/06

(54) **BEDIENELEMENT**
OPERATOR CONTROL ELEMENT
ÉLÉMENT DE COMMANDE

(30) Priorität: 16.11.2011 DE 102011118723
(43) Veröffentlichungstag der Anmeldung: 24.09.2014
(73) Patentinhaber: Audi AG, 85045 Ingolstadt (DE)
(72) Erfinder: SCHNEIDER, Johann, 85139 Wettstetten (DE); WACHINGER, Michael, 86571 Winkelhausen (DE)
(74) Vertreter: Brandt, Kai
(86) Internationale Anmeldenummer: PCT/EP2012/004392
(87) Internationale Veröffentlichungsnummer: WO 2013/072000

(56) Entgegenhaltungen:
- EP-A2- 1 705 553
- DE-A1- 10 325 850
- DE-A1-102006 051 028
- GB-A- 1 000 853

## Beschreibung

Die vorliegende Erfindung betrifft eine Bedienelementanordnung gemäß dem Oberbegriff des Patentanspruchs 1. Eine derartige Bedienelementanordnung ist aus der DE 103 43 134 A1 bekannt.

Bei dem Bedienelement aus der DE 103 43 134 A1 ist das Bedienelement ortsfest und annähernd bündig mit der Oberfläche einer Fahrzeugverkleidung verbunden. Eine gattungsgemäße Bedeinelement-anordnung zeigt die DE 10 2006 051 028 A1.

Aufgabe der Erfindung ist es, ein Bedienelement mit einer einfachen Handhabung und einem großen Einsatzspektrum zu schaffen.

Diese Aufgabe wird durch die Merkmale des Patentanspruchs 1 gelöst. Vorteilhafte Ausgestaltungen und Weiterbildungen der Erfindung sind den Unteransprüchen zu entnehmen.

Erfindungswesentlich ist, dass das Bedienelement um eine Drehachse, die parallel zu einer Oberfläche einer Fahrzeugverkleidung verläuft, schwenkbar gelagert ist. Der Schwenkwinkel liegt dabei vorzugsweise zwischen 5 und 30°. Durch eine derartige Ausgestaltung des Bedienelements kann es an beliebiger Stelle in der gesamten Innenverkleidung des Fahrzeugs verwendet werden, was den Einsatz von Bedienelementen in Fahrzeugen erweitert.

In einer Ausgestaltung der Erfindung ist der in der Fahrzeugverkleidung befindliche Bereich des Bedienelements zwischen Betätigungserfassungssensoren gelagert. Somit drückt der in der Fahrzeugverkleidung befindliche Bereich des Bedienelements, bei einer Betätigung des Bedienelements durch den Bediener, welche zu einem Schwenken des Bedienelements um die Drehachse führt, gegen einen der Betätigungserfassungssensoren, der ein Sensorsignal erzeugt. Vorteilhafterweise sind die Betätigungserfassungssensoren als Drucksensoren ausgebildet, selbstverständlich sind auch andere Sensoren als Betätigungserfassungssensoren denkbar. Durch diese Ausgestaltung entsteht ein gut handhabbares Bedienelement, dass ähnlich wie eine Klaviertaste funktioniert.

Vorteilhafterweise steht der dem Bediener zugewandte Bereich des Bedienelements aus der Oberfläche der Fahrzeugverkleidung hervor. Besonders vorteilhaft ist es, wenn der Überstand im Bereich von 3 cm bis 8 cm liegt. Diese Ausbildung des Bedienelements erhöht die Zugänglichkeit zu dem Bedienelement und verbessert dadurch auch die Bedienbarkeit.

In der Erfindung ist ein Aktor in das Bedienelement integriert, der bei einer Betätigung des Bedienelements durch den Bediener dem Bedienelement eine Bewegung aufprägt und somit eine taktile Rückmeldung an den Bediener erzeugt. Hierbei kann der Aktor beispielsweise ein elektromagnetisch angetriebener Aktor sein. Bei einer Betätigung des Bedienelements wird von den Betätigungssensoren ein Betätigungssignal an eine Steuereinheit geleitet. Die Steuereinheit leitet dieses Betätigungssignal an den Aktor und löst diesen aus.

Die Bedienfelder sind erfindungsgemäß als Drucktaster oder berührungsempfindliche Oberflächen ausgebildet und auf der Oberseite und/oder der Unterseite des Bedienelements angeordnet. Bei einer Anordnung der Bedienfelder auf der Oberseite und der Unterseite des dem Bediener zugewandten Bereichs des Bedienelements ist es besonders vorteilhaft, wenn komplementäre Bedienfunktionen wie beispielsweise "Lautstärke lauter" und "Lautstärke leiser" gegenüberliegend angeordnet sind, also "Lautstärke lauter" auf der Oberseite und "Lautstärke leiser" auf der Unterseite des dem Bediener zugewandten Bereichs des Bedienelements. Durch eine solche Ausgestaltung des Bedienelements wird die intuitive Bedienung des Bedienelements verbessert. Selbstverständlich können den Bedienfeldern auch andere Funktionen wie beispielsweise Temperaturregelung, Lüftungsregelung, oder Radiosender zugeordnet sein.

In einer weiteren Ausgestaltung der Erfindung ist das Bedienelement an einer Seitenwand einer Mittelkonsole oder an einer Fahrzeugtüre angeordnet.

Vorteilhafterweise weist der dem Bediener zugewandte Bereich des Bedienelements einen tropfenförmigen Querschnitt auf.

In einer weiteren Ausgestaltung der Erfindung ist das Bedienelement in Form einer Leiste oder eines Bügels ausgebildet.

Das Bedienelement kann aus einem Kunststoff oder einem Metall wie Aluminium gefertigt sein. Zur Verbesserung der Darstellung einzelner Bedienfelder des Bedienelements kann vorgesehen sein, dass die Oberflächen (bei Kunstoff), die normalerweise aus einer dunklen Deckschicht bestehen, an den Bedienfeldgrenzen freigelasert sind und ein Leuchtmittel wie beispielsweise eine LED oder OLED in das Bedienelement integriert ist. Eine solche Ausgestaltung führt zu einer Ausleuchtung der Grenzbereiche der Bedienfelder. Auch ist eine indirekte Lichteinspeisung mittels Lichtleiter in das Bedienelement denkbar, um die Grenzbereiche der Bedienfelder beleuchten zu können.

Im Folgenden wird die Erfindung anhand der Zeichnung näher erläutert
Die Figur 1 zeigt eine Ausführungsform des Bedienelements in einer Schnittdarstellung,
die Figur 2 zeigt eine Draufsicht auf das Bedienelement.

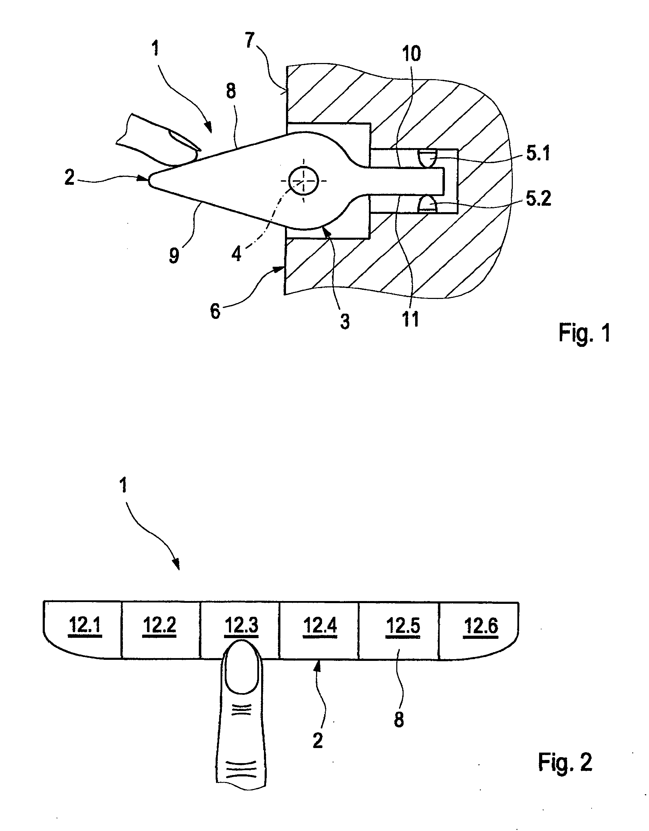

In der Schnittdarstellung von Figur 1 weist das Bedienelement 1 einen einem Bediener zugewandten Bereich 2, der aus der Fahrzeugverkleidung 6 hervorsteht und einen in der Fahrzeugverkleidung 6 befindlichen Bereich 3, auf. Hierbei steht der dem Bediener zugewandte Bereich 2 3 cm bis 8 cm aus der Fahrzeugverkleidung 6 hervor. Das Bedienelement 1 ist um die Drehachse 4, die parallel zu einer Oberfläche 7 der Fahrzeugverkleidung 6 verläuft, schwenkbar gelagert. Dabei liegt der Schwenkwinkel, um den das Bedienelement schwenkt, im Bereich von 10° bis 25°. Der in der Fahrzeugverkleidung 6 befindliche Bereich 3 des Bedienelements 1 ist zwischen Betätigungserfassungssensoren 5.1, 5.2 gelagert. Drückt nun der Bediener auf ein Bedienfeld 12.1, 12.2, 12.3, 12.4, 12.5, 12.6 auf der Oberseite 8 oder der Unterseite 9 des dem Bediener zugewandten Bereichs 2 des Bedienelements 1, so schwenkt das Bedienelement 1 um die Drehachse 4 des Bedienelements 1. Durch diese Schwenkbewegung drückt der in der Fahrzeugverkleidung 6 befindliche Bereich 3 des Bedienelements 1 mit einer Seite 10, 11 auf die Betätigungserfassungssensoren 5.1, 5.2, die als Drucksensoren ausgebildet sind. Welche Seite 10, 11 auf die Betätigungserfassungssensoren 5.1, 5.2 drückt, ist abhängig davon, ob ein Bedienfeld 12.1, 12.2, 12.3, 12.4, 12.5, 12.6 der Oberseite 8 oder der Unterseite 9 des dem Bediener zugewandten Bereichs 2 des Bedienelements 1 betätigt wird. Bei der Betätigung eines Bedienfelds auf der Oberseite 8 des dem Bediener zugewandten Bereichs 2 des Bedienelements 1 drückt die Seite 10 des in der Fahrzeugverkleidung 6 befindlichen Bereichs 3 des Bedienelements 1 auf den Betätigungserfassungssensor 5.1. Wird ein Bedienfeld auf der Unterseite 9 des dem Bediener zugewandten Bereichs 2 des Bedienelements 1 betätigt, so drückt die Seite 11 des in der Fahrzeugverkleidung 6 befindlichen Bereichs 3 des Bedienelements 1 auf den Betätigungserfassungssensor 5.2. Die Betätigungserfassungssensoren 5.1, 5.2 leiten das Betätigungssignal an eine nicht dargestellte Steuereinheit, die anschließend die entsprechende Bedienfunktion ausführt und einen, in dem Bedienelement 1 befindlichen, in der Fig. 1 nicht dargestellten Aktor ansteuert. Der Aktor erzeugt bei seiner Ansteuerung eine taktile Rückmeldung an den Bediener, indem dieser dem gesamten Bedienelement eine Bewegung entlang der Drehachse 4 des Bedienelements aufprägt, die von dem Bediener spürbar ist.

Die Figur 2 zeigt eine Draufsicht des dem Bediener zugewandten Bereichs 2 des Bedienelements 1. Auf der Oberseite 8 des dem Bediener zugewandten Bereichs 2 des Bedienelements 1 sind mehrere Bedienfelder 12.1 bis 12.6 mit unterschiedlichen Bedienfunktionen angeordnet. Hierbei sind die Bedienfelder 12.1 bis 12.6 mit "positiven" Bedienfunktionen wie beispielsweise Lautstärke lauter, Temperaturerhöhung, Lüftungssteigerung, oder Einschalten der Inneraumbeleuchtung belegt.

## Patentansprüche

1. Bedienelementanordnung mit einem Bedienelement (1) für ein Fahrzeug, wobei das Bedienelement (1) aus einem einem Bediener zugewandten Bereich (2) und einem in einer Fahrzeugverkleidung (6) befindlichen Bereich (3) besteht und wobei das Bedienelement (1) um eine Drehachse (4) schwenkbar gelagert ist, **dadurch gekennzeichnet, dass** das Bedienelement (1) mehrere als Drucktaster oder berührungsempfindliche Oberflächen ausgebildete Bedienfelder (12.1, 12.2, 12.3, 12.4, 12.5, 12.6) aufweist und ein dem Bedienelement (1) zugeordneter Aktor vorgesehen ist, der eine Bewegung des Bedienelements (1) bei einer Betätigung der Bedienfelder (12.1, 12.2, 12.3, 12.4, 12.5, 12.6) des Bedienelements (1) erzeugt.

2. Bedienelementanordnung nach Anspruch 1, **dadurch gekennzeichnet, dass** die Drehachse (4) parallel zu einer Oberfläche (7) der Fahrzeugverkleidung (6) verläuft.

3. Bedienelementanordnung nach Anspruch 1 oder 2, **dadurch gekennzeichnet, dass** der in der Fahrzeugverkleidung (6) befindliche Bereich (3) des Bedienelements (1) zwischen Betätigungserfassungssensoren (5.1, 5.2) gelagert ist.

4. Bedienelementanordnung nach Anspruch 3, **dadurch gekennzeichnet, dass** die Betätigungserfassungssensoren (5.1, 5.2) als Drucksensoren ausgebildet sind.

5. Bedienelementanordnung nach Anspruch 4, **dadurch gekennzeichnet, dass** ein Sensorsignal der Drucksensoren (5.1, 5.2) den Aktor ansteuert.

6. Bedienelementanordnung nach einem der Ansprüche 1 bis 5, **dadurch gekennzeichnet, dass** der dem Bediener zugewandte Bereich (2) aus der Oberfläche (7) der Fahrzeugverkleidung (6) hervorsteht.

7. Bedienelementanordnung nach einem der Ansprüche 1 bis 6, **dadurch gekennzeichnet, dass** die Bedienfelder (12.1, 12.2, 12.3, 12.4, 12.5, 12.6) auf der Oberseite (8) und/oder der Unterseite (9) des dem Bediener zugewandten Bereichs (2) des Bedienelements (1) angeordnet sind.

8. Bedienelementanordnung nach einem der Ansprüche 1 bis 7, **dadurch gekennzeichnet, dass** das Bedienelement (1) an einer Seitenwand der Mittelkonsole angeordnet ist.

9. Bedienelementanordnung nach einem der Ansprüche 1 bis 7, **dadurch gekennzeichnet, dass** das Bedienelement (1) an einer Fahrzeugtüre angeordnet ist.

10. Bedienelementanordnung nach einem der Ansprüche 1 bis 9, **dadurch gekennzeichnet, dass** der dem Bediener zugewandte Bereich (2) einen in etwa tropfenförmigen Querschnitt aufweist.

11. Bedienelementanordnung nach einem der Ansprüche 1 bis 10, **dadurch gekennzeichnet, dass** das Bedienelement (1) als Schalterleiste ausgebildet ist.

12. Bedienelementanordnung nach einem der Ansprüche 1 bis 10, **dadurch gekennzeichnet, dass** das Bedienelement (1) als Bügel ausgebildet ist.

## Claims

1. Operating element arrangement comprising an operating element (1) for a vehicle, the operating element (1) consisting of a region (2) facing an operator and a region (3) arranged in a vehicle panel (6), and the operating element (1) being mounted so as to be pivotable about an axis of rotation (4), **characterised in that** the operating element (1) comprises a plurality of operating fields (12.1, 12.2, 12.3, 12.4, 12.5, 12.6) in the form of pushbuttons or touch-sensitive surfaces, and an actuator associated with the operating element (1) is provided and generates a movement of the operating element (1) when the operating fields (12.1, 12.2, 12.3, 12.4, 12.5, 12.6) of the operating element (1) are actuated.

2. Operating element arrangement according to claim 1, **characterised in that** the axis of rotation (4) extends in parallel with a surface (7) of the vehicle panel (6).

3. Operating element arrangement according to either claim 1 or claim 2, **characterised in that** the region (3) of the operating element (1) arranged in the vehicle panel (6) is mounted between actuation detection sensors (5.1, 5.2).

4. Operating element arrangement according to claim 3, **characterised in that** the actuation detection sensors (5.1, 5.2) are designed as pressure sensors.

5. Operating element arrangement according to claim 4, **characterised in that** a sensor signal from the pressure sensors (5.1, 5.2) controls the actuator.

6. Operating element arrangement according to any of claims 1 to 5, **characterised in that** the region (2) facing the operator protrudes from the surface (7) of the vehicle panel (6).

7. Operating element arrangement according to any of claims 1 to 6, **characterised in that** the operating fields (12.1, 12.2, 12.3, 12.4, 12.5, 12.6) are disposed on the top (8) and/or the bottom (9) of the region (2) of the operating element (1) facing the operator.

8. Operating element arrangement according to any of claims 1 to 7, **characterised in that** the operating element (1) is arranged on a sidewall of the centre console.

9. Operating element arrangement according to any of claims 1 to 7, **characterised in that** the operating element (1) is disposed on a vehicle door.

10. Operating element arrangement according to any of claims 1 to 9, **characterised in that** the region (2) facing the operator has an approximately drop-shaped cross section.

11. Operating element arrangement according to any of claims 1 to 10, **characterised in that** the operating element (1) is formed as a switch panel.

12. Operating element arrangement according to any of claims 1 to 10, **characterised in that** the operating element (1) is formed as a bar.

## Revendications

1. Aménagement d'élément de commande comprenant un élément de commande (1) pour un véhicule, dans lequel l'élément de commande (1) est constitué d'une zone (2) tournée vers un opérateur et d'une zone (3) se trouvant dans un chemisage (6) du véhicule et dans lequel l'élément de commande (1) est monté à pivotement autour d'un axe de rotation (4), **caractérisé en ce que** l'élément de commande (4) présente plusieurs touches de commande (12.1, 12.2, 12.3, 12.4, 12.5, 12.6) conçues sous forme d'interrupteurs à poussoir ou de surfaces tactiles et il est prévu un actionneur affecté à l'élément de commande (1) qui provoque un déplacement de l'élément de commande (1) lors d'une commande des touches de commande (12.1, 12.2, 12.3, 12.4, 12.5, 12.6) de l'élément de commande (1).

2. Aménagement d'élément de commande selon la revendication 1, **caractérisé en ce que** l'axe de rotation (4) s'étend parallèlement à une surface (7) du chemisage (6) du véhicule.

3. Aménagement d'élément de commande selon la revendication 1 ou la revendication 2, **caractérisé en ce que** la zone (3) de l'élément de commande (1) se trouvant dans le chemisage (6) du véhicule est montée entre des capteurs d'enregistrement de commande (5.1, 5.2).

4. Aménagement d'élément de commande selon la revendication 3, **caractérisé en ce que** les capteurs d'enregistrement de commande (5.1, 5.2) se présentent sous la forme de capteurs de pression.

5. Aménagement d'élément de commande selon la revendication 4, **caractérisé en ce qu'**un signal des capteurs de pression (5.1, 5.2) commande l'actionneur.

6. Aménagement d'élément de commande selon l'une quelconque des revendications 1 à 5, **caractérisé en ce que** la zone (2) tournée vers l'opérateur ressort de la surface (7) du chemisage (6) du véhicule.

7. Aménagement d'élément de commande selon l'une quelconque des revendications 1 à 6, **caractérisé en ce que** les touches de commande (12.1, 12.2, 12.3, 12.4, 12.5, 12.6) sont aménagées sur la face supérieure (8) et/ou la face inférieure (9) de la zone (2) de l'élément de commande (1) tournée vers l'opérateur.

8. Aménagement d'élément de commande selon l'une quelconque des revendications 1 à 7, **caractérisé en ce que** l'élément de commande (1) est aménagé sur une paroi latérale de la console centrale.

9. Aménagement d'élément de commande selon l'une quelconque des revendications 1 à 7, **caractérisé en ce que** l'élément de commande (1) est aménagé sur une porte du véhicule.

10. Aménagement d'élément de commande selon l'une quelconque des revendications 1 à 9, **caractérisé en ce que** la zone (2) tournée vers l'opérateur présente une section transversale plus ou moins en forme de goutte.

11. Aménagement d'élément de commande selon l'une quelconque des revendications 1 à 10, **caractérisé en ce que** l'élément de commande (1) est conçu en réglette de commutation.

12. Aménagement d'élément de commande selon l'une quelconque des revendications 1 à 10, **caractérisé en ce que** l'élément de commande (1) est conçu en étrier.
